# EUROPEAN PATENT APPLICATION

(11) **EP 3 128 214 A2**
(43) Date of publication of application: **08.02.2017**
(21) Application number: 15770239.0
(22) Date of filing: 25.03.2015
(51) Int. Cl.: F16K 31/122, F16F 1/366, F15B 13/10, F15B 20/00

(54) **HYDRAULIC ACTUATOR WITH SPRING RETURN**

(30) Priority: 28.03.2014 BR 14007557
(71) Applicant: FMC Technologies Do Brasil LTDA, 21941-615 Rio de Janeiro (BR)
(72) Inventor: ZARAGOZA LABES, Alan, 22776-070 Rio de Janeiro - RJ (BR)
(74) Representative: Linage González, Rafael
(86) International application number: PCT/BR2015/050033
(87) International publication number: WO 2015/143524

(57) **Abstract**

The present invention refers to a submarine hydraulic actuator with spring return, wherein the said spring is exposed directly in contact with the seawater, being constituted of inert material to corrosion and of special building. The said spring is assembled in a moving stopper (3) coupled by fixation special means to the actuator rod (5) and that is in sliding contact with a stabilizer extension (4) of the actuator rod (5) through two or more guide tears (20).

## Description

### Field of the invention

The present invention refers to a hydraulic actuator with spring return for operating submerged valves in a platform of petroleum production located in a manifold structure or in a wet Christmas tree.

### Background of the invention

One of the factors that most damage equipment and affect its operational means in the submarine environment is corrosion due to aggressive means wherein seawater is constituted.

The submarine hydraulic actuators existing on the market today with return characteristics in case of failure, store the energy for the return in a metallic spring. The systems of corrosion protection usually employed in submarine equipment such as coatings that isolate the material from contact with seawater, and cathodic protection; they cannot be applied to the actuator spring because the deformation of the spring prevents the application of coating and the metal used for manufacturing this spring is not compatible with the system of cathodic protection as it is a material subject to embrittlement due to hydrogen produced migration by chemical reaction of the cathodic protection.

The current technology for corrosion protection of the actuator spring is based on the immersion of the spring in a water or oil-based corrosion inhibitor fluid. A series of extra components and procedures is necessary for performing this strategy.

Other aspect noted in the means currently employed, is that is necessary a housing for spring and for corrosion inhibitor fluid contention. A second housing with variable inner volume connected to the spring housing is necessary to promote the corrosion inhibitor fluid contention when with volumetric change due to temperature variations. The connection between these two housings is performed through a tubing that is also necessary. To protect the system from improper pressure increase due to thermal expansion of the fluid, the tubing connecting two housings is equipped with a relief valve to the environment. This system is called compensation. Several seal elements are present in the system for having the corrosion inhibitor fluid. The tubing of the compensation system may be interconnected to the control system to enable the corrosion inhibitor fluid replacement.

Other drawback found in current systems employed is that the metallic spring must be wrapped in a sealed package having sequestering material of oxygen to prevent corrosion during its storage. After assembling the spring in the actuator, the filling of corrosion inhibitor fluid, the spring housing chamber must pass through a long flow process of high flow rate of the inhibitor fluid corrosion to remove contaminant particles that could clog the tubing holes of the compensation system.

In these kinds of spring actuators, during the storage of these already assembled and after its assembly in the end equipment, constant monitoring and replacement of the corrosion inhibitor fluid in the reservoirs is needed. It is common in the industry the inflow of seawater when the actuator is submerged or air while still on the surface, causing corrosion of the spring despite all barriers and precautions against corrosion.

According to the drawbacks mentioned above, it is noted that in the hydraulic actuators with spring return to operate submerged valves designed so far, they have complex construction characteristics due to the corrosion problem of the spring.

It is object of the invention to eliminate or minimize these prior art problems by designing a pressure actuator with spring that due to the constitution of the spring material, may have its operation with the spring exposed to seawater, and present proper constructive characteristics, simpler and more efficient. Thus the actuator spring is made from selected material inert to corrosion of seawater and resistant to submarine environment such that the protection of the corrosion inhibitor fluid and all previous devices and procedures are no longer needed. As the spring will be exposed to seawater, it will not be necessary to have a housing for containing the corrosion inhibitor fluid, not all sealing elements; and the connection with this part to the compensation system is not yet necessary.

Additionally, it is the object of the present invention to eliminate all preservation procedures of the spring in inert environment of oxygen, of spring housing cleaning and corrosion inhibitor fluid replacement.

### Brief description of the figures

The present invention will be described in the following with reference to the attached figures, which in a schematic and non-limitative to its scope manner, represent:

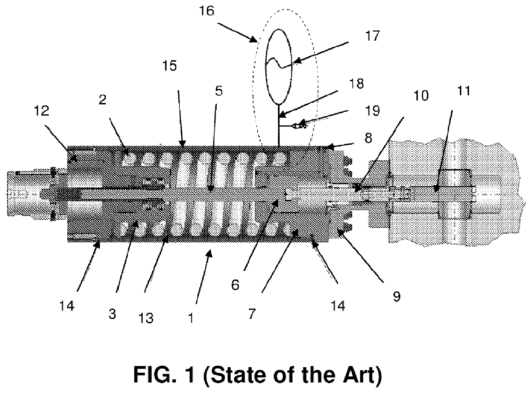

- Figure 1 illustrates a cross section view of a hydraulic actuator with spring return, according to the prior art;

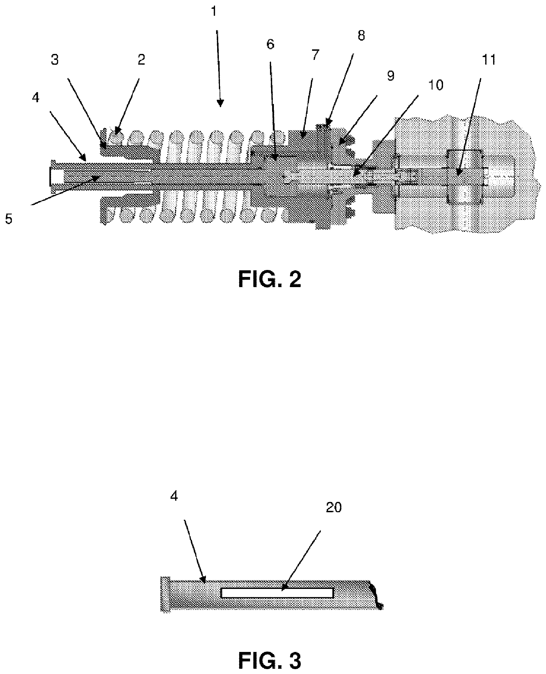

- Figure 2 illustrates a cross section view of the hydraulic actuator with spring return, according to the present invention;
- Figure 3 illustrates a detail of the stabilizer extension provided with guide tears, according to the present invention;

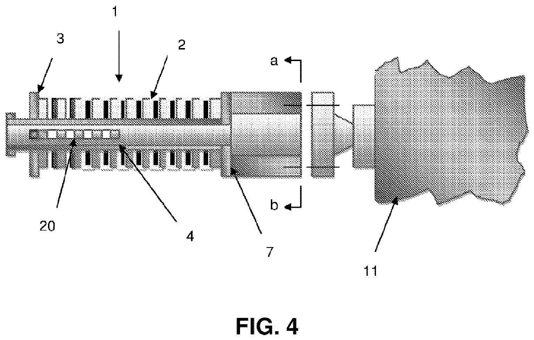

- Figure 4 illustrates a schematic view in partial cut (a - b), longitudinal of other constructive embodiment of the hydraulic actuator to use with springs of plate or ring, according to the present invention.

### Detailed description of the invention

In the present description, the term "spring" means any mean storing energy through the deformation of one or more solid elements.

The hydraulic actuator with spring return, object of the invention, operates with spring (2) directly exposed to seawater without the need of a special housing (15) for the said spring (2), dismissing, as noted in the figure of the state of the art, besides the housing (15), compensation system (16, 17, 18 e 19), corrosion inhibitor fluid (13), system of inhibitor fluid replacement (12) and also sealing means (14). Thus, the constructive characteristics of the pressure actuator, according to the present invention, have special aspects and much less complex than the actuators known in the current technique.

By being the spring (2) of the actuator (1) of the present invention manufactured in inert material, it is assembled in an exposed manner to seawater, in a moving stopper (3) coupled to actuator rod (5) by any fixation mean known, such as screw key, weld, etc. The said moving stopper (3) is in sliding contact with a stabilizer extension (4) of the rod (5), through two or more guide tears (20).

In operation, the actuator has one control fluid inlet (8) in the piston chamber (7), the fluid acting in a piston (6) by both sides, promoting the spring compression and expansion, which causes the longitudinal displacement of the actuator rod (5) and consequently the valve closure and opening (11), this fixed to the actuator by flange (9) and connected to the said piston by valve rod (10).

The pressure actuator of the invention, as here defined, may have springs with different constructive concepts, such as helical spring, ring spring, plate spring, etc., as well as any type of inert materials, in this way not overcoming or modifying its inventive concept.

## Claims

1. Hydraulic actuator with spring return, of a type comprising a system with control fluid (8) acting in a piston (6) coupled, on one side, to a rod (10) of valve (11) through the flange (9) and, on the other side, to an actuator rod (5), where a spring (2) of the actuator is fitted into the piston chamber (7), wherein the spring (2) of inert material of the actuator (1) is assembled in direct contact with the seawater in a moving stopper (3) coupled by fixation special means to the actuator rod (5), and wherein the said moving stopper (3) is in sliding contact with a stabilizer extension (4) of the actuator rod (5), through two or more guide tears (20).

2. Hydraulic actuator with spring return according to claim 1, wherein the inert material of the spring (2) comprises a carbon fiber composite material.

3. Hydraulic actuator with spring return according to claims 1 or 2, wherein the spring of inert material is coil-type spring.

4. Hydraulic actuator with spring return according to claims 1 or 2, wherein the spring of inert material is ring-type spring.

5. Hydraulic actuator with spring return according to claims 1 or 2, wherein the spring of inert material is plate-type spring.

6. Hydraulic actuator with spring return according to claim 1, wherein the fixation means of the moving stopper (3) with the actuator rod (5) comprises screws, keys and welds.

7. Hydraulic actuator with spring return according to claims 4 or 5, wherein the moving stopper (3) has the shape of a flat disk.
